# EUROPEAN PATENT SPECIFICATION

(11) **EP 2 352 683 B1**
(45) Date of publication and mention of the grant of the patent: **05.08.2015**
(21) Application number: 10740290.1
(22) Date of filing: 21.06.2010
(51) Int. Cl.: B65D 25/08, B65D 75/58, B65D 81/32, B65D 51/22

(54) **ASEPTIC POUCH WITH A SPOUT**
ASEPTISCHER BEUTEL MIT EINER GIESSTÜLLE
POCHE ASEPTIQUE COMPORTANT UN BEC VERSEUR

(30) Priority: 28.07.2009 IT PR20090058
(43) Date of publication of application: 10.08.2011
(73) Proprietor: Wild Parma S.r.l., 43044 Collecchio (PR) (IT)
(72) Inventor: FURLOTTI, Filippo, 43026 Traversetolo (Parma) (IT); WILD, Hans Peter, 6300 Zurich (CH)
(74) Representative: Gotra, Stefano
(86) International application number: PCT/IB2010/052799
(87) International publication number: WO 2011/077268

(56) References cited:
- EP-A1- 1 884 349
- WO-A2-2007/079290
- JP-A- 9 249 266
- US-A- 2 932 385
- US-B1- 6 527 444

## Description

### TECHNICAL FIELD AND BACKGROUND ART.

The present invention relates to a pouch for storing at least one substance, a packaging bag comprising said pouch and a method for manufacturing thereof.

In particular, said packaging bag finds application in the field of packaging food products or pharmaceutical compounds. In particular, the substances stored in said packaging bag may be in liquid or powdered form.

As is well known, packaging bags may be provided empty (in this case, it is better to refer to "pouch") or already filled with the substance to store and equipped with a spout. Usually, the pouch is obtained by shaping flexible sheets material, such as plastic, coated paper or coated foil. In particular, solutions have been disclosed in which two sheets are stacked on each other and then sealed together in correspondence of a tract of the external perimeter of the sheets themselves. Another tract of the external perimeter is left unsealed in order to define an opening for inserting the spout. The portion of the spout inserted inside said opening, which has the shape of a narrow lozenge, is then sealed to the edges of the sheets defining the opening. The empty pouch is then filled by introducing a nozzle through the free outlet (through which the user extracts the stored substance) of the spout. Finally, the free outlet of the spout is closed by a cap.

The main drawback of these solutions is linked to the difficulty of obtaining complete aseptic conditions inside the pouch.

Indeed, the inner part of the pouch must be aseptic and hermetically separated from the outside in order to assure the maintenance of the properties of the stored substance. As a matter of fact, the solutions of prior art pose a high risk of pollution from external contaminants. Indeed, the free outlet of the spout is blocked by the cap after the pouch has been filled. Although the application of the cap prevents the stored substance to pour out, it does not provide a hermetic barrier since small quantities of oxygen and light may pass through the outlet.

A technical problem that arises is linked to the difficulties of sterilizing the spout due to its shape. Indeed, the lozenge portion of the spout is not easy to sterilize since it presents lots of sharp edges. In addition, the lozenge portion of the spout, with its sharp edges, also raises sealing issues. Indeed, it is even more difficult to sterilize the spout (together with its closure or cap) after having applied it to the pouch.

Another disadvantage of the known solutions is related to the necessity of sterilizing the whole packaging bag, including the spout, so leading to a high expenditure of time and costs. Indeed, for sterilizing pouch and spout, chemical agents or electron bombardment or gamma rays are commonly used.

Another solution is known wherein the pouch is filled before sealing the spout to it. Such a solution also raises high risks of contamination. Indeed, during sealing operations of the spout, quantities of the substance may pour out of the pouch. Moreover, some oxygen may remain inside the pouch so causing oxidation of the stored substance.

In this context, the technical task on which the present invention is based is to propose a pouch for storing at least one substance, a packaging bag comprising said pouch and methods for manufacturing thereof, which overcome the drawbacks of the aforementioned prior art.

### DISCLOSURE OF INVENTION.

In particular, an object of the present invention is to propose a pouch for storing at least one substance and a method for manufacturing said pouch, in which complete aseptic conditions are easy and cheap to obtain.

An additional object of the present invention is to propose a packaging bag for storing at least one substance and a method for manufacturing said packaging bag, in which issues related to sterilization of the spout are easily overcome.

Another object of the present invention is to make available a packaging bag for storing at least one substance and a method for manufacturing said packaging bag, in which the spout is easily sealed to the pouch.

Yet another object of the present invention is to make available a packaging bag for storing at least one substance and a method for manufacturing said packaging bag, in which time and costs of sterilization are decreased with respect to known solutions. Document US 6,527,444 B1, in particular FIG.6 and FIG.8, discloses a pouch and a method for manufacturing a pouch according to the preambles of claims 1 and 8, respectively.

The technical task and the objects specified above are substantially achieved by a pouch for storing at least one substance, a packaging bag comprising said pouch and methods for manufacturing therof, comprising the technical characteristics exposed in one or more of the appended claims.

### BRIEF DESCRIPTION OF DRAWINGS.

Additional characteristics and advantages of the present invention shall become more readily apparent from the indicative, and hence non limiting, description of a preferred but not exclusive embodiment of a pouch for storing at least one substance, a packaging bag comprising said pouch and methods for manufacturing thereof, as illustrated in the accompanying drawings in which:

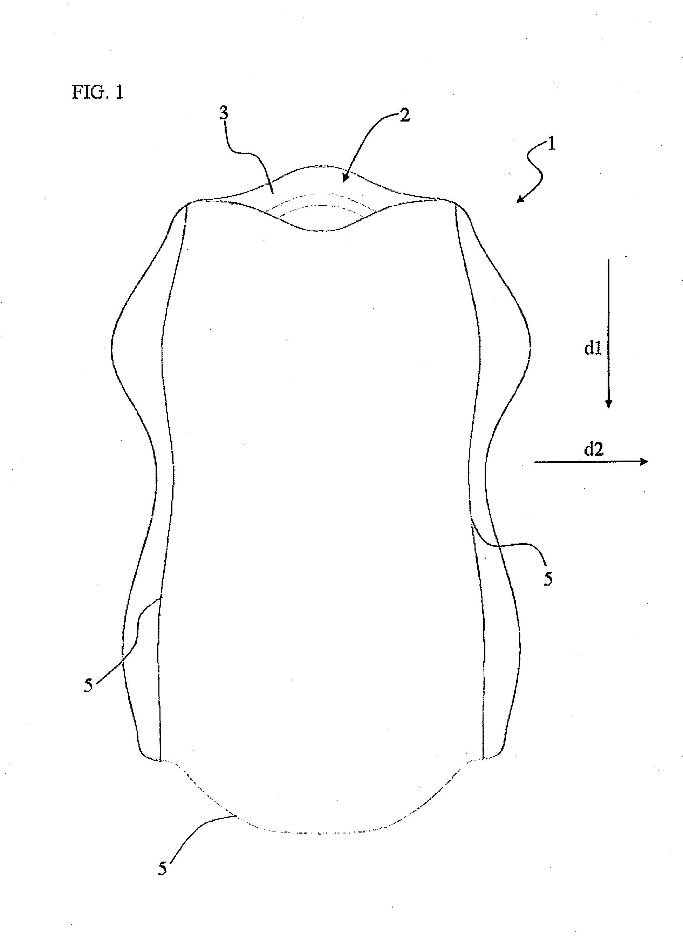

- figure 1 shows a perspective view of a pouch for storing at least one substance, which does not form part of the present invention, in an open configuration;

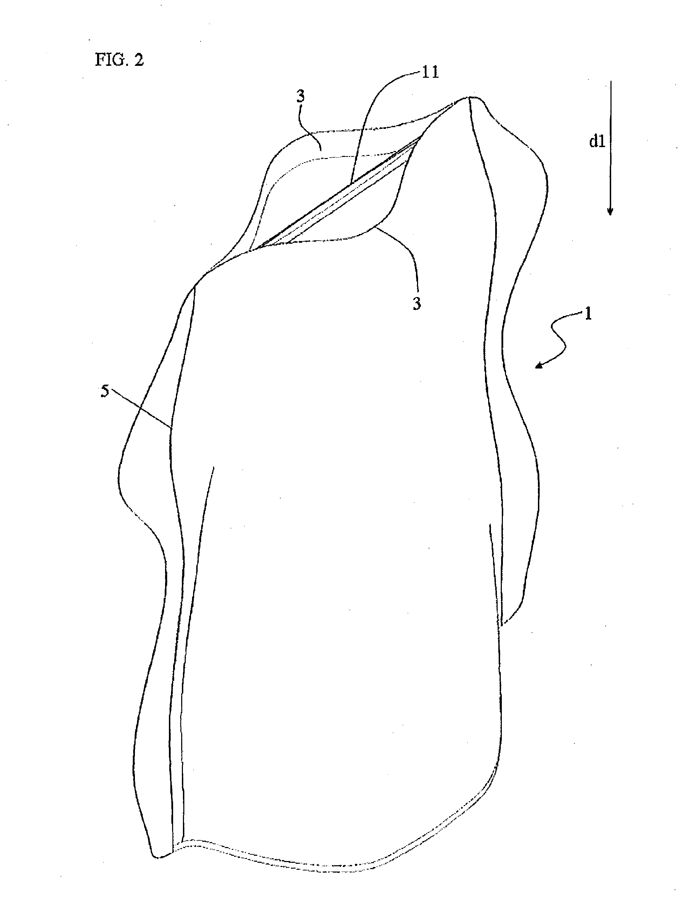

- figure 2 shows a perspective view of the pouch of figure 1, in a sealed configuration;
- figure 3 shows a cutaway view of the pouch of figure 1, in the sealed configuration;
- figure 4 shows a perspective view of a detail (laminated sheet) of the pouch of figure 1;
- figure 5 shows a perspective view of a packaging bag, according to the present invention;
- figure 6 shows a cutaway view of the packaging bag of figure 5;
- figure 7 shows a cutaway view of a detail of the packaging bag of figure 5;

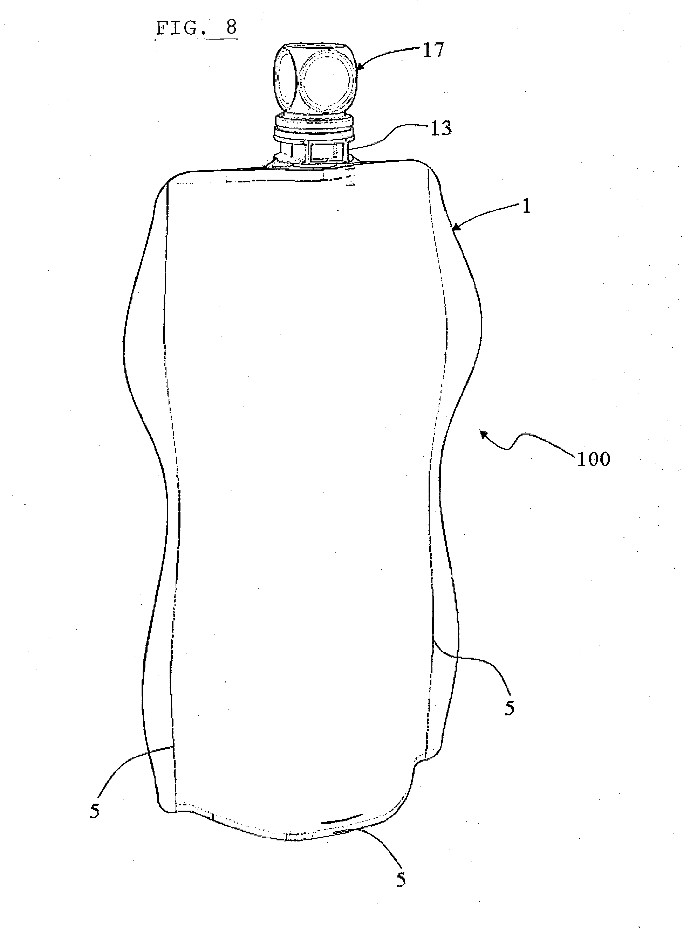

- figure 8 shows a frontal view of the packaging bag of figure 5.

### BEST MODE FOR CARRYING OUT THE INVENTION.

With reference to the figures, the number 1 indicates a pouch for storing at least one substance. For example, the substance stored in the pouch 1 is a liquid. Preferably, the substance is a drink like water, the, milk, juice, etc. In alternative, the substance is a pharmaceutical compound.

The pouch has an outlet 2, bordered by free edges 3 of the pouch 1, for extracting the substance. The empty pouch 1 substantially extends in two directions (the thickness has been omitted for the sake of simplicity): a first direction d1 is substantially defined by the flowing of the substance during the extraction step, a second direction d2 is substantially perpendicular to the first direction d1. Along the first direction d1, the pouch 1 extends in length, whilst along the second direction d2 the pouch 1 extends in width. In the embodiment shown herein, opposite to the outlet 2 of the pouch 1 with respect to the first direction d1, there is a bottom 1a of the pouch 1 itself.

The pouch 1 comprises at least a first inner layer 6a arranged inside it. The first inner layer 6a is partly attached to a first wall 19a of the pouch 1 so that it has a free strip 8a detached from the pouch 1. Advantageously, said free strip 8a is operatively joinable to a second wall 19b of the pouch 1 to obtain a sealed membrane 11 for closing a fillable aseptic housing 9 of the pouch 1. Preferably, the second wall 19b is opposite to the first wall 19a. The sealed membrane 11, also referred to as first sealed membrane 11, is obtained in proximity of the outlet 2 so defining a seat 12 delimited by the sealed membrane 11 itself.and by the free edges 3 of the pouch 1. The seat 12 is configured in such a way as to receive a spout 13.

The pouch 1 is obtained by shaping at least one sheet 4. The housing 9 is preferably delimited by the sheet 4. In the embodiment described and illustrated herein, two laminated sheets 4a, 4b are stacked on each other and partly sealed together at a common peripheral border 5 in such a way as to form the pouch 1.

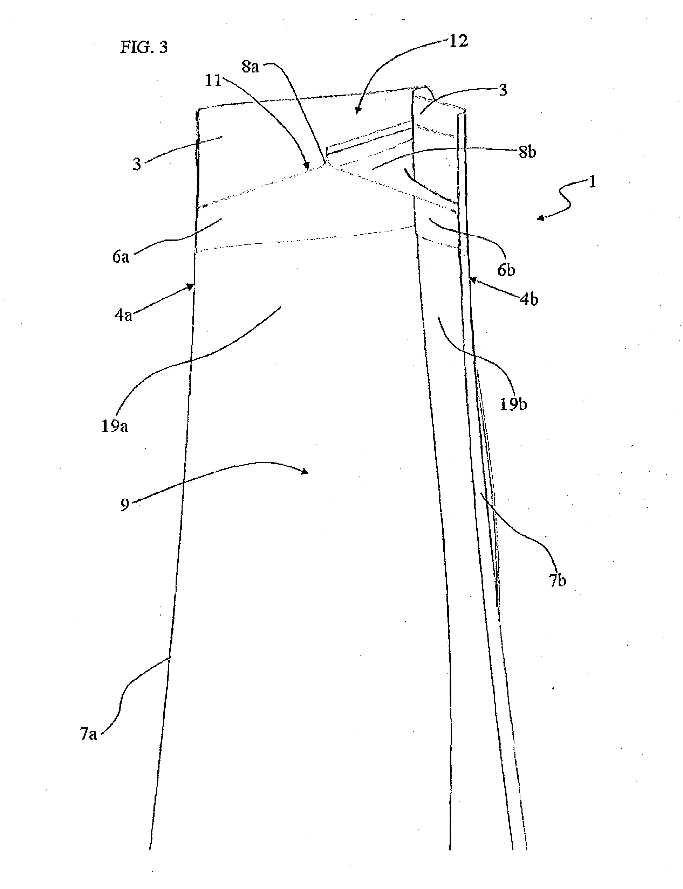

In the embodiment shown in figure 3, the pouch 1 also comprises a second inner layer 6b arranged inside it. Preferably, each of the two laminated sheets 4a, 4b is composed by one of the inner layers 6a, 6b and by an outer layer 7a, 7b. The outer layers 7a, 7b define the exterior surface of the pouch 1. The first and the second walls 19a and 19b form the internal sides of the outer layers 7a and 7b. Between the inner layer 6a, 6b and the outer layer 7a, 7b of each laminated sheet 4a, 4b, at least an intermediate layer or a coating may be present. For example, said coating is formed by a paint.

The second inner layer 6b is partly attached to the second wall 19b so that it has a free strip 8b detached from the pouch 1. The free strips 8a, 8b of the inner layers 6a, 6b are joinable together to obtain the sealed membrane 11, as shown in figure 3.

In the embodiment described and illustrated herein, the inner layers 6a, 6b extend in proximity of the free edges 3 of the pouch 1. Each inner layer 6a, 6b is sealed to the correspondent outer layer 7a, 7b (or to the intermediate layer or coating, if present) along a main welding tract 10a substantially parallel to the second direction d2. Each inner layer 6a, 6b is also sealed to the correspondent outer layer 7a, 7b (or to the intermediate layer or coating, if present) along two side welding tracts 10b located laterally and oppositely to each other with respect to the main welding tract 10a. In particular, the two side welding tracts 10b follow the external perimeter of their laminated sheets 4a, 4b. The free strips 8a, 8b of the inner layers 6a, 6b extend among the relative welding tracts 10.

In an embodiment according to the present invention (non illustrated), the inner layers 6a, 6b extend over the whole development of the laminated sheets 4a, 4b adhering only partially to the correspondent outer layer 7a, 7b (or to the correspondent intermediate layer or coating, if present). Indeed, each inner layer 6a, 6b adheres to the correspondent outer layer 7a, 7b (or to the correspondent intermediate layer or coating) over the development of the housing 9 and along the correspondent two side welding tracts 10b so to leave the correspondent free strip 8a, 8b detached from the outer layer 7a, 7b in correspondence of the outlet 2.

Preferably, the first and the second inner layers 6a, 6b are formed by the same material. Said material has a melting point lower than the melting points of the other materials involved in forming the pouch 1. In particular, the material constituting the inner layers 6a, 6b is PE, whilst the material constituting the outer layers 7a, 7b is PET.

In a further embodiment, at least a septum or second sealed membrane 15 divides the aseptic housing 9 of the pouch 1 into a plurality of rooms 16 for storing as many different substances. Preferably, the second sealed membrane 15 is located between the bottom 1a of the pouch 1 and the first sealed membrane 11, parallel to the second direction d2. For example, the second sealed membrane 15 is located at the same distance from the bottom 1a and the first sealed membrane 11. Alternatively, the second sealed membrane 15 is arranged inside the pouch 1 in such a way as to be parallel to the first direction d1.

An embodiment (not illustrated) is also provided in which a plurality of septa or further sealed membranes are employed. In this case, the septa are located in as many positions between the bottom 1a of the pouch 1 and the first sealed membrane 11 and they are susbtantially parallel to each other (and to the second direction d2). The substances stored in the rooms 16 may be liquids or powders.

Another embodiment (not illustrated) is provided in which the pouch 1 comprises an auxiliary outlet, bordered by auxiliary free edges, placed in correspondence with the bottom 1a of the pouch 1. In this case, the inner layers 6a, 6b leave auxiliary free strips detached from the pouch 1 in correspondence with said auxiliary outlet. Advantageously, the auxiliary free strips are joinable together to obtain an auxiliary sealed membrane separating the housing 9 from an auxiliary seat configured in such a way as to receive an auxiliary spout. In particular, the auxiliary seat is delimited by the auxiliary membrane and by the auxiliary free edges of the pouch 1. The spout 13 and the auxiliary spout may subsequently communicate with the same housing 9, or they are afferent to different rooms 16.

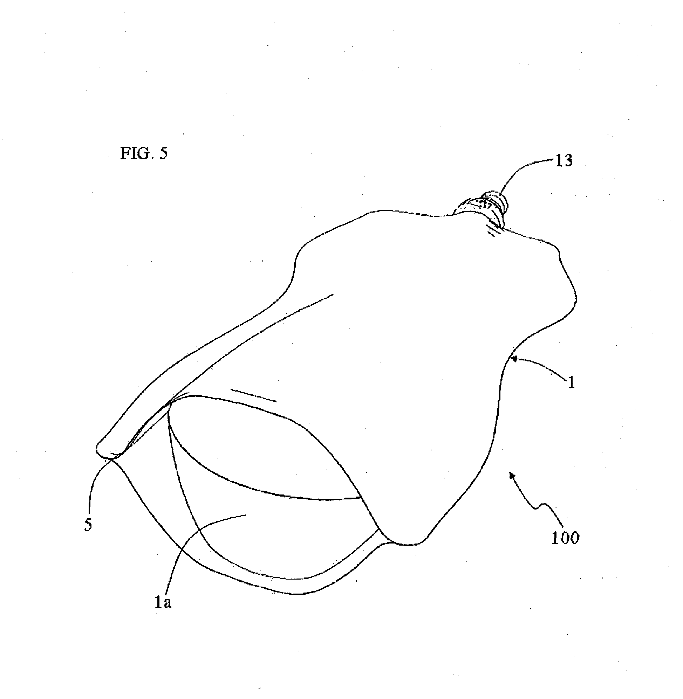

In figure 5, the reference number 100 indicates a packaging bag comprising a pouch 1 and a spout 13 located in the seat 12 of the pouch 1 and fixed thereto.

Preferably, the spout 13 has an outlet opening 13a and an inlet opening 13b. In particular, the outlet opening 13a is susceptible to be closed by a cap 17. Preferably, said outlet opening 13a is externally threaded, whilst the cap 17 is internally threaded in order to be screwed on the outlet opening 13a. On the other side, the inlet opening 13b, is arranged at the sealed membrane 11. In another embodiment (not illustrated), the spout 13 is equipped with a blade configured in such a way as to get in contact with said first sealed membrane 11 for excising it.

The method for manufacturing a pouch and a packaging bag, according to the present invention, is described hereafter.

The housing 9 is obtained by shaping the sheet 4. Two laminated sheets 4a, 4b are stacked on each other and partly sealed together at the common peripheral border 5 in such a way as to form the pouch 1 and, thus, the housing 9.

The first inner layer 6a is arranged inside the housing 9 in such a way as to be partly attached to the first wall 19a and to leave the free strip 8a detached from the pouch 1.

Said second inner layer 6b is arranged inside the housing 9 in such a way as to be partly attached to the second wall 19b and to leave the free strip 8b detached from the pouch 1.

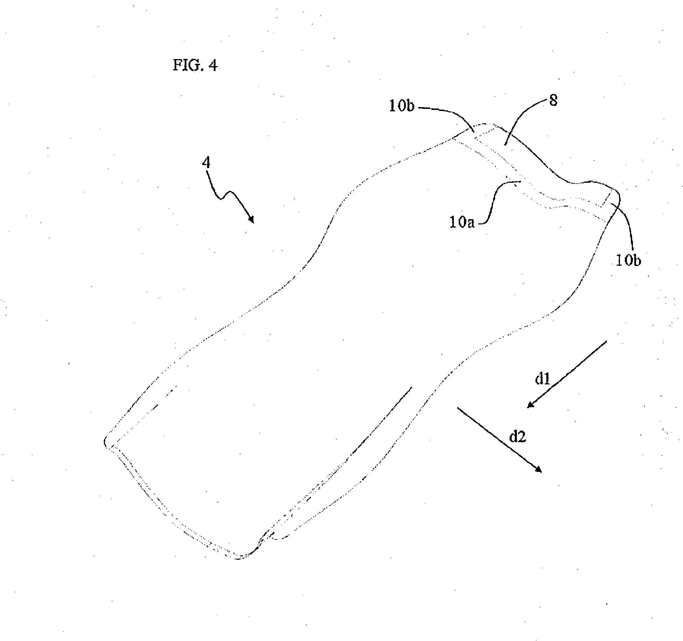

In particular, in the embodiments illustrated and described herein, each inner layer 6a, 6b is partly sealed to the correspondent outer layer 7a, 7b, leaving the free strips 8a, 8b detached from the pouch 1 in correspondence of the outlet 2. As shown in figure 4, which does not form part of the present invention, each inner layer 6a, 6b is sealed to the correspondent outer layer 7a, 7b along the main welding tract 10a and the side welding tracts 10b.

While the pouch 1 is in the open configuration just described above, the housing 9 is aseptically filled with a prefixed quantity of substance. The substance flows into the housing 9 through the outlet 2 (that is used both for filling and extracting the substance).

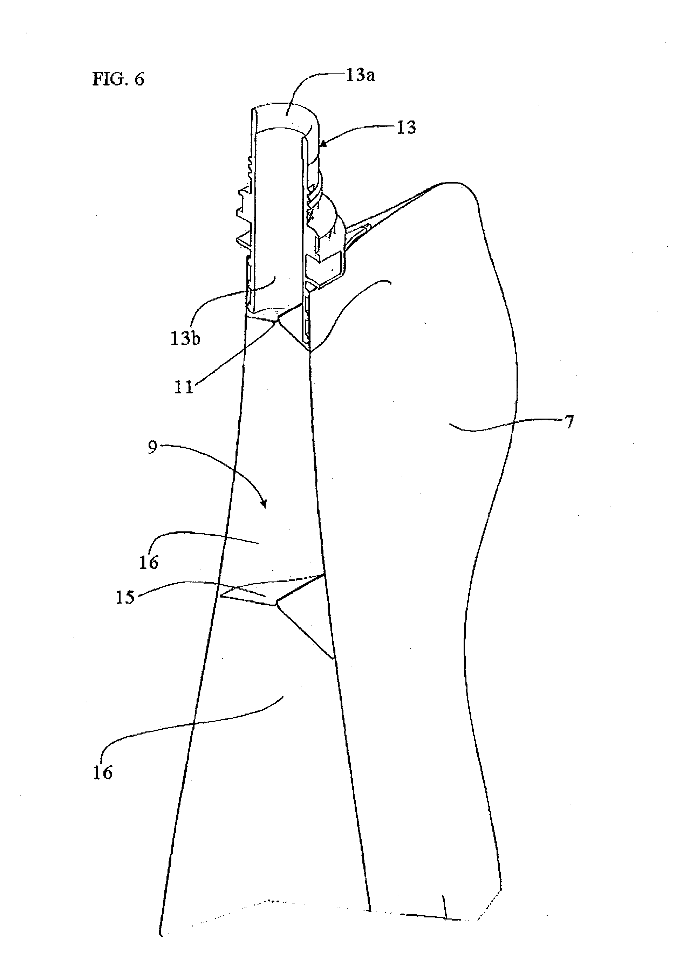

If the packaging bag 100 is meant to store different substances, the housing 9 is divided into a plurality of rooms 16. Indeed, as illustrated in figure 6, different portions of the inner layers 6a, 6b are sealed together in order to obtain the second sealed membrane 15 dividing the housing 9 into the rooms 16. The rooms 16 are filled with as many different substances.

The relative free strips 8a, 8b are sealed together to obtain the first sealed membrane 11, so the pouch 1 passes to the sealed configuration. Therefore, the filled aseptic housing 9 is separated from seat 12. In particular, the seat 12 is not preserved from contamination.

The spout 13 is placed inside the seat 12 and fixed thereto. In particular, the inlet opening 13b of the spout 13 is arranged inside the sealed membrane 11. The outlet opening 13a of the spout 13 is closed by the cap 17.

If the blade is present, it faces the first sealed membrane 11 in such a way that the blade can be pushed towards the membrane 11 for excising it.

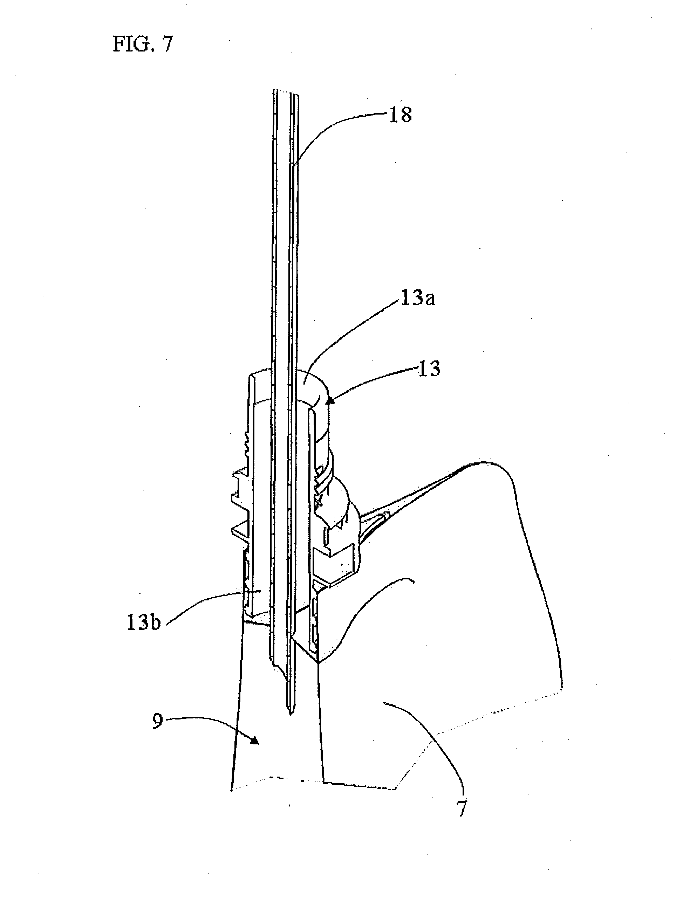

In alternative, the membrane 11 may be excised by a straw 18, as shown in figure 7.

From the above description, the characteristics of the pouch for storing at least one substance, of the packaging bag comprising said pouch and of the method for manufacturing thereof, according to the present invention, are clear, as are their advantages.

In particular, thanks to the employment of the sealed membrane separating the aseptic housing from the seat, complete aseptic conditions for the pouch are easily obtained.

Moreover, the spout is provided to the packaging bag only after having filled the housing and having sealed it by the membrane, so sterilization issues concerning the spout are overcome. Indeed, the filling step is carried out inserting a nozzle inside the pouch without passing through the spout (that has not been placed yet). Therefore, since the only concern is about sterilizing the pouch and not the entire packaging bag, costs and time are decreased.

In addition, the spout is easily sealed to the pouch. Indeed, the spout is placed in the (non aseptic) seat and sealed between the free edges of the pouch.

## Claims

1. Pouch (1) for storing at least one substance, comprising an outlet (2) for extracting the substance, said outlet (2) being bordered by free edges (3) of the pouch (1);
at least a first inner layer (6a) arranged inside and partly attached to a first wall (19a) of the pouch (1) so that said first inner layer (6a) has a free strip (8a) detached from the pouch (1) and operatively joinable to a second wall (19b) of the pouch (1) to obtain a sealed membrane (11) for closing a fillable aseptic housing (9) of the pouch (1) and defining, in proximity of said outlet (2), a seat (12) configured in such a way as to receive a spout (13), said seat (12) being delimited by the membrane (11) and by said free edges (3) of the pouch (1) ;
a second inner layer (6b) arranged inside and partly attached to said second wall (19b) so that said second inner layer (6b) has a free strip (8b) detached from the pouch (1) and joinable to the free strip (8a) of said first inner layer (6a) to obtain said sealed membrane (11),
**characterised in that** the pouch (1) is formed by a pair of laminated sheets (4a, 4b) stacked on each other and partly sealed together at a common peripheral border (5), each of said laminated sheets (4a, 4b) being formed by one of the inner layers (6a, 6b) and by an outer layer (7a, 7b) defining the exterior surface of the pouch (1), wherein the inner layers (6a, 6b) extend over the whole development of the laminated sheets (4a, 4b).

2. Pouch (1) as claimed in claim 1, wherein the free strip (8a) of the first inner layer (6a) is directly joinable to said second wall (19b) of the pouch (1).

3. Pouch (1) as claimed in claim 1, wherein the material constituting the first inner layer (6a) has a melting point lower than the melting points of the other materials involved in forming the pouch (1).

4. Pouch (1) as claimed in claim 1, wherein the material constituting the first inner layer (6a) and the second inner layer (6b) is the same and has a melting point lower than the melting points of the other materials involved in forming the pouch (1)

5. Pouch (1) as claimed in any of the previous claims, further comprising at least a second sealed membrane (15) dividing said aseptic housing (9) into a plurality of rooms (16) for storing as many different substances.

6. Pouch (1) as claimed in claim 1, wherein each laminated sheet (4a, 4b) further comprises at least an intermediate layer or a coating located between the relative inner layer (6a, 6b) and outer layer (7a, 7b).

7. Packaging bag (100) comprising a pouch (1) as claimed in any of the previous claims and a spout (13) located in said seat (12) of the pouch (1) and fixed thereto.

8. Packaging bag (100) as claimed in claim 7, wherein the spout (13) has an inlet opening (13b) being arranged at the sealed membrane (11) and an outlet opening (13a) susceptible to be closed by a cap (17).

9. Method for manufacturing a pouch (1) according to claim 1 for storing at least one substance, comprising the following steps:
shaping at least one sheet (4) to obtain a housing (9) for storing the substance, said housing (9) having an outlet (2) for extracting the substance,
arranging at least a first inner layer (6a) inside the housing (9) in such a way as said first inner layer (6a) is partly attached to a first wall (19a) of the pouch (1) and has a free strip (8a) detached from the pouch (1), said free strip (8a) being operatively joinable to a second wall (19b) of the pouch (1) to obtain a sealed membrane (11, 15) for closing said housing (9) after having filled it or for dividing the housing (9) into a plurality of rooms (16) for storing as many different substances;
arranging a second inner layer (6b) inside the housing (9) in such a way as said second inner layer (6b) is partly attached to the second wall (19b) of the pouch (1) and has a free strip (8b) detached from the pouch (1) and joinable to the free strip (8a) of said first inner layer (6a) to obtain said sealed membrane (11),
**characterised in that** the step of shaping said at least one sheet (4) comprises the step of stacking two laminated sheets (4a, 4b) on each other and sealing them together at a common peripheral border (5) in such a way to form the pouch (1), each of said laminated sheets (4a, 4b) being formed by one of the inner layers (6a, 6b) and by an outer layer (7a, 7b) defining the exterior surface of the pouch (1).

## Patentansprüche

1. Beutel (1) zur Aufbewahrung mindestens einer Substanz, umfassend einen Auslass (2) für die Extraktion der Substanz, wobei der Auslass (2) von freien Kanten (3) des Beutels (1) umrandet ist;
mindestens eine erste innere Schicht (6a), innenseitig angeordnet und teilweise angebracht an einer ersten Wand (19a) des Beutels (1), sodass die erste innere Schicht (6a) einen freien Streifen (8a) aufweist, der vom Beutel (1) losgelöst ist und betriebswirksam mit einer zweiten Wand (19b) des Beutels (1) verbunden werden kann, um eine abgedichtete Membran (11) zu erhalten, um ein befüllbares aseptisches Gehäuse (9) des Beutels (1) zu verschließen, und definierend in der Nähe des Auslasses (2) einen Sitz (12), der so ausgelegt ist, dass er eine Gießtülle (13) aufnimmt, wobei der Sitz (12) durch die Membran (11) und die freien Kanten (3) des Beutels (1) begrenzt ist;
eine zweite innere Schicht (6b), innenseitig angeordnet und teilweise angebracht an der zweiten Wand (19b), sodass die zweite innere Schicht (6b) einen freien Streifen (8b) aufweist, der vom Beutel (1) losgelöst ist und mit dem freien Streifen (8a) der ersten inneren Schicht (6a) verbunden werden kann, um die abgedichtete Membran (11) zu erhalten,
**dadurch gekennzeichnet, dass** der Beutel (1) durch ein Paar gewalzter Bleche (4a, 4b) gebildet ist, die aufeinander gestapelt und zusammen an einem gemeinsamen umlaufenden Rand (5) teilweise versiegelt sind, wobei ein jedes der gewalzten Bleche (4a, 4b) durch eine der inneren Schichten (6a, 6b) und durch eine äußere Schicht (7a, 7b) gebildet ist, definierend die äußere Oberfläche des Beutels (1), wobei sich die inneren Schichten (6a, 6b) über die gesamte Entwicklung der gewalzten Bleche (4a, 4b) erstrecken.

2. Beutel (1) nach Anspruch 1, wobei der freie Streifen (8a) der ersten inneren Schicht (6a) direkt mit der zweiten Wand (19b) des Beutels (1) verbindbar ist.

3. Beutel (1) nach Anspruch 1, wobei das Material, aus dem die erste innere Schicht (6a) besteht, einen Schmelzpunkt aufweist, der geringer ist als die Schmelzpunkte der anderen Materialien, die an der Bildung des Beutels (1) beteiligt sind.

4. Beutel (1) nach Anspruch 1, wobei das Material, aus dem die erste innere Schicht (6a) und die zweite innere Schicht (6b) bestehen, dasselbe ist und einen Schmelzpunkt aufweist, der geringer ist als die Schmelzpunkte der anderen Materialien, die an der Bildung des Beutels (1) beteiligt sind.

5. Beutel (1) nach einem der vorhergehenden Ansprüche, zudem umfassend mindestens eine zweite abgedichtete Membran (15), die das aseptische Gehäuse (9) in eine Vielzahl an Räumen (16) zur Aufbewahrung vieler verschiedener Substanzen unterteilt.

6. Beutel (1) nach Anspruch 1, wobei jedes gewalzte Blech (4a, 4b) zudem mindestens eine Zwischenschicht oder eine Beschichtung zwischen der relativen inneren Schicht (6a, 6b) und der äußeren Schicht (7a, 7b) umfasst.

7. Verpackungstasche (100), umfassend einen Beutel (1) nach einem der vorhergehenden Ansprüche und eine Gießtülle (13), befindlich im Sitz (12) des Beutels (1) und daran fixiert.

8. Verpackungstasche (100) nach Anspruch 7, wobei die Gießtülle (13) eine Einlassöffnung (13b) aufweist, die an der abgedichteten Membran (11) angeordnet ist, und eine Auslassöffnung (13a), die durch eine Kappe (17) verschlossen werden kann.

9. Verfahren zur Herstellung eines Beutels (1) nach Anspruch 1 zur Aufbewahrung mindestens einer Substanz, umfassend folgende Schritte:
Formen von mindestens einem Blech (4), um ein Gehäuse (9) zur Aufbewahrung der Substanz zu erhalten, wobei das Gehäuse (9) einen Auslass (2) zur Extraktion der Substanz aufweist;
Anordnen von mindestens einer ersten inneren Schicht (6a) im Gehäuse (9), sodass die erste innere Schicht (6a) teilweise an einer ersten Wand (19a) des Beutels (1) angebracht ist und einen freien Streifen (8a) aufweist, der vom Beutel (1) losgelöst ist, wobei der freie Streifen betriebswirksam mit einer zweiten Wand (19b) des Beutels (1) verbunden werden kann, um eine abgedichtete Membran (11, 15) zu erhalten, um das Gehäuse (9) zu verschließen, nachdem es befüllt wurde, oder um das Gehäuse (9) in eine Vielzahl von Räumen (16) zur Aufbewahrung ebenso vieler verschiedener Substanzen zu unterteilen;
Anordnen einer zweiten inneren Schicht (6b) im Gehäuse (9), sodass die zweite innere Schicht (6b) teilweise an der zweiten Wand (19b) des Beutels (1) angebracht ist und einen freien Streifen (8b) aufweist, der vom Beutel (1) losgelöst ist und mit dem freien Streifen (8a) der ersten inneren Schicht (6a) verbunden werden kann, um die abgedichtete Membran (11) zu erhalten,
**dadurch gekennzeichnet, dass** der Schritt zum Formen von mindestens einem Blech (4) den Schritt zum Aufeinanderstapeln zweier gewalzter Bleche (4a, 4b) und deren gemeinsames Siegeln an einem gemeinsamen umlaufenden Rand (5) umfasst, sodass der Beutel (1) gebildet wird, wobei ein jedes der gewalzten Bleche (4a, 4b) durch eine der inneren Schichten (6a, 6b) und eine äußere Schicht (7a, 7b) gebildet ist, definierend die äußere Oberfläche des Beutels (1).

## Revendications

1. Poche (1) servant à stocker au moins une substance, comprenant une sortie (2) servant à extraire la substance, ladite sortie (2) étant entourée de bords libres (3) de la poche (1) ;
au moins une première couche interne (6a) disposée à l'intérieur d'une, et partiellement fixée à une première paroi (19a) de la poche (1) de sorte que ladite première couche interne (6a) possède une bande libre (8a) détachée de la poche (1) et pouvant fonctionnellement être jointe à une seconde paroi (19b) de la poche (1) pour obtenir une membrane étanche (11) pour fermer un logement (9) aseptique remplissable de la poche (1) et définissant, à proximité de ladite sortie (2), un siège (12) configuré de manière à recevoir un bec verseur (13), ledit siège (12) étant délimité par la membrane (11) et par lesdits bords libres (3) de la poche (1) ;
une seconde couche interne (6b) disposée à l'intérieur de, et partiellement fixée à ladite seconde paroi (19b) de sorte que ladite seconde couche interne (6b) possède une bande libre (8b) détachée de la poche (1) et pouvant être jointe à la bande libre (8a) de ladite première couche interne (6a) pour obtenir ladite membrane étanche (11),
**caractérisée en ce que** la poche (1) est formée d'une paire de feuilles stratifiées (4a, 4b) empilées l'une sur l'autre et partiellement scellées ensemble à une bordure périphérique commune (5), chacune desdites feuilles stratifiées (4a, 4b) étant formée par une des couches internes (6a, 6b) et par une couche externe (7a, 7b) définissant la surface extérieure de la poche (1), dans laquelle les couches internes (6a, 6b) se développent au-dessus de tout le développement des feuilles stratifiées (4a, 4b).

2. Poche (1) selon la revendication 1, dans laquelle la bande libre (8a) de la première couche interne (6a) peut directement être jointe à ladite seconde paroi (19b) de la poche (1).

3. Poche (1) selon la revendication 1, dans laquelle le matériau constituant la première couche interne (6a) possède un point de fusion inférieur aux points de fusion des autres matériaux impliqués dans la constitution de la poche (1).

4. Poche (1) selon la revendication 1, dans laquelle le matériau constituant la première couche interne (6a) et la seconde couche interne (6b) est identique et possède un point de fusion inférieur aux points de fusion des autres matériaux impliqués dans la constitution de la poche (1).

5. Poche (1) selon l'une quelconque des revendications précédentes, comprenant de plus au moins une seconde membrane étanche (15) divisant ledit logement aseptique (9) en une pluralité de compartiments (16) pour stocker autant de substances différentes.

6. Poche (1) selon la revendication 1, dans laquelle chaque feuille stratifiée (4a, 4b) comprend de plus au moins une couche intermédiaire ou un revêtement situé entre la couche interne correspondante (6a, 6b) et la couche externe (7a, 7b).

7. Sac de conditionnement (100) comprenant une poche (1) selon l'une quelconque des revendications précédentes et un bec verseur (13) situé dans ledit siège (12) de la poche (1) et fixé à celle-ci.

8. Sac de conditionnement (100) selon la revendication 7, dans lequel le bec verseur (13) possède une ouverture d'entrée (13b) étant disposée au niveau de la membrane étanche (11) et une ouverture de sortie (13a) susceptible d'être fermée par un bouchon (17).

9. Procédé de fabrication d'une poche (1) selon la revendication 1, servant à stocker au moins une substance, comprenant les étapes suivantes :
donner forme à au moins une feuille (4) pour obtenir un logement (9) pour stocker la substance, ledit logement (9) ayant une sortie (2) pour extraire la substance ;
disposer au moins une première couche interne (6a) à l'intérieur du logement (9) de manière à ce que ladite première couche interne (6a) soit partiellement fixée à une première paroi (19a) de la poche (1) et possède une bande libre (8a) détachée de la poche (1), ladite bande libre (8a) pouvant fonctionnellement être jointe à une seconde paroi (19b) de la poche (1) pour obtenir une membrane étanche (11, 15) pour fermer ledit logement (9) après l'avoir rempli ou pour diviser le logement (9) en une pluralité de compartiments (16) pour stocker autant de substances différentes ;
disposer une seconde couche interne (6b) à l'intérieur du logement (9) de manière à ce que ladite seconde couche interne (6b) soit partiellement fixée à la seconde paroi (19b) de la poche (1) et possède une bande libre (8b) détachée de la poche (1) et pouvant être jointe à la bande libre (8a) de ladite première couche interne (6a) pour obtenir ladite membrane étanche (11),
**caractérisé en ce que** l'étape consistant à donner forme à ladite au moins une feuille (4) comprend l'étape d'empilage de deux feuilles stratifiées (4a, 4b) l'une sur l'autre et leur scellage à un bordure périphérique commune (5) de manière à former la poche (1), chacune desdites feuilles stratifiées (4a, 4b) étant formées par une des couches internes (6a, 6b) et par une couche externe (7a, 7b) définissant la surface extérieure de la poche (1).
